# EUROPÄISCHE PATENTSCHRIFT

(11) **EP 2 108 937 B1**
(45) Veröffentlichungstag und Bekanntmachung des Hinweises auf die Patenterteilung: **07.04.2010**
(21) Anmeldenummer: 08103439.9
(22) Anmeldetag: 08.04.2008
(51) Int. Cl.: G01N 21/03, G01N 21/09

(54) **Gasmesszelle zur Kalibrierung optischer Gasanalysatoren für den Hochtemperaturbereich**
Gas measuring cell for calibration of gas analysers for high temperatures
Cellule de mesure de gaz pour la calibration des analysateurs de gaz pour hautes temperatures

(43) Veröffentlichungstag der Anmeldung: 14.10.2009
(73) Patentinhaber: SICK MAIHAK GmbH, 79183 Waldkirch (DE)
(72) Erfinder: Nuber, Frank, Emmendingen 79312 (DE)
(74) Vertreter: Ludewigt, Christoph

(56) Entgegenhaltungen:
- WO-A-98/17742
- DE-A1- 4 214 572
- FR-A- 2 603 104
- GB-A- 2 227 568
- US-A- 4 021 124
- US-A- 4 907 883
- US-A1- 2005 168 734

## Beschreibung

Die vorliegende Erfindung betrifft eine Gasmesszelle zur Kalibrierung optischer Gasanalysatoren nach dem Oberbegriff des Anspruchs 1.

Zur optischen Analyse von gasförmigen Proben sind im Wesentlichen zwei Funktionsprinzipien bekannt.

Dabei handelt es sich zum einen um ein extraktives Messverfahren. Bei diesem extraktiven Messverfahren wird aus dem Gasstrom mittels einer Sonde eine Gasprobe entnommen und einem externen Messgerät/Messort zur Analyse zugeführt. Die Gasprobe liegt dann in einer Gasmesszelle vor, in der es vor der Analyse konditioniert wird, d.h. getrocknet, gekühlt, gefiltert usw., so dass die Gasprobe bei der Analyse konstante Zustandsbedingungen eingenommen hat und eine optische Analyse zur Bestimmung von Konzentrationen spezifischer Elemente oder Verbindungen in dem Gas problemlos erfolgen kann.

Bei dem zweiten Prinzip handelt es sich um das so genannte "In-situ"-Prinzip, bei der die Analyse eines Gasstromes durch spektralanalytische Messungen direkt, z.B. in einer den Gasstrom führenden Leitung, durchgeführt wird. Damit aus diesen an unkonditionierten Gasströmen durchgeführten Messungen Rückschlüsse auf die tatsächlichen Gaszusammensetzungen und Konzentrationen im aktuellen Prozess erfolgen können, muss das Ergebnis der Analyse mit einem mathematischen Auswerteverfahren aufgearbeitet werden. Um jedoch ein derartiges mathematisches Auswerteverfahren anwenden zu können, ist es notwendig, zuvor ein entsprechendes Kalibriermodell zu erstellen. Zur Erstellung eines derartigen Kalibriermodells, in dem die Auswirkungen von z. B. Druck, Temperatur, Konzentration und dergleichen auf die optische Analyse des Gases ermittelt werden können, ist es bekannt, entsprechende Prüfküvetten, bei denen es sich auch um Gasmesszellen handelt, zu verwenden und mit denen dann bei verschiedenen Drucken, Temperaturen, Konzentrationen und Gasmischungen optische Spektren für die Kalibrierung aufgezeichnet werden und mit deren Hilfe die In-situ gemessenen Daten ausgewertet werden können.

Aus dem Stand der Technik sind dazu im Wesentlichen zwei Arten von Gasmesszellen bekannt. Bei der einfachsten und am häufigsten angewendeten Küvettenart wird das Probegas über eine Gaseinlassöffnung in einen aus Glas oder Kunststoff bestehenden Analyseraum eingebracht und durch eine Gasauslassöffnung wieder ausgelassen. Dabei besitzt der glasförmige Analyseraum wenigstens zwei optische Fenster, damit ein Messstrahl den Analyseraum durchleuchten kann.

Die zweite Art der Küvetten hat zur Aufnahme des Probegases einen zusammen gesetzten Hohlkörper. Dabei ist an einen Grundkörper, der beispielsweise aus Glas, Metall, Keramik oder Kunststoff hergestellt ist, beidseitig ein optisches Fenster angebracht. Diese Fenster sind entweder angeklebt oder werden durch eine Klemmverbindung mit dem Grundkörper verbunden. Dabei erfolgt die Dichtung der Fenster mit dem Grundkörper über die Verklebung oder durch den Einsatz eines elastischen Dichtmaterials, beispielsweise eines O-Ringes.

Nachteilig an den bekannten Gasmesszellen ist die Limitierung beim Einsatz im Hochtemperaturbereich. Der Einsatz von flexiblen Dichtmaterialien ist bei hohen Temperaturen, insbesondere bei Temperaturen über 800 °C, praktisch nicht möglich. Es gibt zwar keramische Kleber, welche hohe Temperaturen aushalten, jedoch können schon kleine Unterschiede im Temperaturausdehnungskoeffizienten der verschiedenen Materialien zur Rissbildung und damit zu Undichtigkeiten führen. Auch die ebenfalls bekannte Diffusionsverschweißung funktioniert bei keramischen Werkstoffen ohne ein Zwischenmaterial nur bei relativ kleinen Komponenten. Aus diesem Grunde wird bei größeren Komponenten oft zur besseren Verbindung und zum Abbau von Spannungen eine Platinschicht als Zwischenmaterial eingesetzt. Beim Einsatz von Gasen mit einer hohen Temperatur wirkt diese Platinschicht jedoch als Katalysator und ist somit für diesen Einsatzzweck nicht geeignet.

Aus der WO 98/17742 ist ein Gasanalysator bekannt zur Kontrolle eines Crackprozesses. Der Analysator besteht aus einem Gasleitungsrohr, in das diametral an gegenüberliegenden Seiten Löcher eingebracht sind, in die Halterungen für optische Glasfasern zum Senden und Empfangen von Messstrahlung einbringbar sind. Die optischen Halter ragen in das Gasleitungsrohr ein kleines Stück hinein und sind am Ende mit einem Fenster verschlossen. Das hineinragende Stück ist durch eine Kappe geschützt und kann mit Spülgas umspült werden zur Reinhaltung des Fensters.

Der Erfindung liegt die Aufgabe zugrunde, eine Gasmesszelle zur Kalibrierung optischer Gasanalysatoren für den Hochtemperaturbereich zu schaffen. Dabei ist sicherzustellen, dass die Temperatur des zu messenden Kalibriergases innerhalb einer optisch wirksamen Messzone eine möglichst konstante Gastemperatur hat.

Diese Aufgabe wird gelöst durch einen Gegenstand mit den Merkmalen des Anspruchs 1.

Die erfindungsgemäße Gasmesszelle weist einen Hohlkörper auf, in den die zu analysierende Probe über eine Gaseinlass- und eine Gasauslassöffnung eingebracht wird, wobei der Hohlkörper einen Analyseraum bildet und aus einem Grundkörper besteht, der an wenigstens einer Stirnseite mit wenigstens einem für Messstrahlung durchlässigen Fenster dicht abgeschlossen ist, so dass zur Analyse der Gasprobe das Gas von einem Messstrahl durchleuchtet werden kann. Erfindungsgemäß weist der Grundkörper im Mittelbereich seiner Längsausdehnung eine beheizte Mittelzone auf, in der sich der Analyseraum befindet, an die sich beidseitig jeweils eine unbeheizte Übergangszone anschließt, so dass die Temperatur zu beiden Seiten der beheizbaren Mittelzone mit zunehmendem Abstand von der Mittelzone kontinuierlich abgebaut wird. Weiter ist wenigstens ein an der Stirnseite des Grundkörpers befestigter und teilweise frei in den Hohlkörper hineinragender Fenstereinschub vorgesehen, wobei der Fenstereinschub zwei, in Längsachse beabstandete Fenster aufweist. Der Fenstereinschub reicht durch die unbeheizte Übergangszone hindurch bis in die beheizte Mittelzone in den Hohlkörper hinein, wobei wenigstens das der beheizten Mittelzone zugewandte, erste Fenster durch ein im Zwischenraum vorhandenes Vakuum im Fenstereinschub gehalten ist.

In jedem Fenstereinschub sind somit zwei, durch einen evakuierbaren Zwischenraum beabstandete Fenster angebracht, so dass ein Messstrahl den Hohlkörper durchdringen kann. Der Fenstereinschub ist so dimensioniert, dass das der Innenseite des Hohlkörpers zugewandte Fenster des Fenstereinschubs freitragend durch die unbeheizte Übergangszone des Grundkörpers hindurch geführt wird, so dass damit die beheizte Messzone im Hohlkörper beidseitig abgegrenzt ist, aber für optische Messstrahlung durchlässig ist.

Der Fenstereinschub besitzt somit ein Fenster im Inneren des Hohlkörpers, das einer hohen Temperatur ausgesetzt ist und ein Fenster an der Außenseite, bei dem eine deutlich niedrigere Temperatur vorhanden ist und deshalb mit bekannten Techniken abgedichtet werden kann. Der Zwischenraum zwischen den beiden Fenstern im Fenstereinschub ist evakuiert, so dass wenigstens das erste, den hohen Temperaturen ausgesetzte Fenster, durch den durch das Vakuum erzeugten Unterdruck gegen eine am Fenstereinschub vorhandene Auflagefläche dichtend gehalten ist und keine besonderen Dichtmaterialien notwendig sind.

Insgesamt ist damit eine Gasmesszelle erhalten, die einerseits einen Analyseraum aufweist, der auf sehr hohe Temperaturbereiche von 800 °C bis 1.400 °C aufgeheizt werden kann und gleichzeitig mit optisch durchsichtigen Fenstern versehen ist, ohne den bekannten Problemen durch hitzebeständige Dichtmaterialien, wie Platin oder der Gefahr von Rissbildungen zu begegnen.

Diese Gasmesszelle kann nicht nur zur Kalibrierung von Gasanalysatoren verwendet werden, sondern ist es auch im Prinzip möglich, die erfindungsgemäße Gasmesszelle für den optischen Zugang zu sehr heißen Prozessen einzusetzen, z.B. zur optischen Analyse eines Gases in einem Brennerraum z.B. einer Müllverbrennungsanlage oder eines Kohlekraftwerks, zur kontinuierlichen In-Situ Analyse von z.B. dem Restsauerstoff im Verbrennungsprozess. Dies erweitert den Einsatz der Erfindung von einer Prüfküvette zu einem optischen Prozesszugang für sehr hohe Temperaturen.

Zweckmäßige Ausgestaltungen und vorteilhafte Weiterbildungen sind aus den nachgeordneten Unteransprüchen ersichtlich.

In einer bevorzugten Ausführungsform der Erfindung ist es vorgesehen, dass der Grundkörper aus einer Keramikröhre besteht an deren Enden beidseitig eine Metallhülse angebracht ist. Dabei wird der Grundkörper im Mittelbereich von einer die Keramikröhre umschließenden Heizeinrichtung indirekt beheizt. In den an die Mittelzone anschießenden unbeheizten Übergangszonen der Keramikröhre wird die Temperatur aufgrund der geringen Wärmeleitfähigkeit der Keramikröhre wieder relativ schnell abgebaut. Damit ist es möglich, die Mittelzone des Hohlkörpers so aufzuheizen, dass Gastemperaturen von beispielsweise 1.400 °C erzeugt werden können und gleichzeitig an den abgekühlten Enden der Keramikröhre Metallhülsen anzubringen. Bevorzugt besteht die Keramikröhre aus Al2O3 und ist ausgelegt, das Gas auf bis zu 1.400 °C aufzuheizen.

In Weiterbildung der Erfindung weist die beheizte Mittelzone drei oder mehr unabhängig regelbare Heizzonen auf. Dies soll sicherstellen, dass abhängig von dem Gasfluss, welcher an der Einlassseite zu einer Abkühlung und an der Auslassseite zu einer Erwärmung führt, die Temperatur über die eigentliche Messstrecke so konstant als möglich gehalten werden kann. Die unbeheizte Übergangszone ist dagegen relativ kurz.

In einer Weiterbildung des Erfindungsgedankens ist vorgesehen, dass die Gaseinlass- und die Gasauslassöffnung des Hohlkörpers jeweils in den an den Enden der Keramikröhre angeordneten Metallhülsen und damit außerhalb des Bereiches der hohen Temperaturen angebracht sind. Damit ist es ebenfalls möglich, für die verschließbare Gaseinlass- bzw. Gasauslassöfffnung sowie für gegebenenfalls weitere Komponenten, Technologien anzuwenden, die bei einer niedrigen Temperaturbelastung üblich und zuverlässig anwendbar sind.

Besonders vorteilhaft ist es, wenn der an den Stirnseiten des Grundkörpers befestigte und frei in den Hohlkörper hinein ragende Fenstereinschub ein Keramikformteil ist. Da der Fenstereinschub auf einer Seite bis in die beheizte Mittelzone im Inneren des Hohlkörpers hinein reicht und somit einer hohen Temperatur ausgesetzt ist, wird durch die Verwendung eines Keramikformteils im Fenstereinschub die Temperatur in Richtung der Außenseite ebenfalls schnell abgebaut. Damit ist es nach einer vorteilhaften Ausbildung der Erfindung möglich, auf der nicht in den Hohlkörper hinein ragenden Seite des Keramikformteils ein Befestigungsflansch aus Metall zur Verbindung mit dem rohrförmigen Grundkörper anzubringen.

In einer Weiterbildung der Erfindung ist es vorgesehen, dass zum Evakuieren des zwischen den Fenstern im Fenstereinschub vorhandenen Zwischenraumes ein Vakuumpumpenanschluss vorhanden ist. Damit ist es in vorteilhafter Weise möglich, dass nicht nur die Fenster durch einen Unterdruck dicht im Fenstereinschub gehalten sind, sondern dass sich durch ein konstant gutes Vakuum kein störendes Gas im Fenstereinschub befindet und somit keine Störung bei der Analyse der Gasprobe auftritt.

In einer weiteren Ausführungsform ist es vorgesehen, dass zur gasdichten Verbindung des ersten dem Analyseraum zugewandten Fensters mit dem Keramikformteil am Keramikformteil eine Kontaktfläche vorgesehen ist und die Fensteroberfläche so ausgebildet ist, dass durch den Unterdruck im Zwischenraum des Fenstereinschubs eine Dichtung durch Druck auf die Kontaktfläche erfolgt, die vergleichbar ist mit dem bei optischen Systemen üblichen Aufsprengverfahren. Darüber hinaus wird durch den Unterdruck im Zwischenraum des Fenstereinschubs diese Dichtfunktion weiter verstärkt, so dass insbesondere bei auftretendem Temperaturwechsel innerhalb der Gasmesszelle ein gutes Vakuum erhalten bleibt und somit keine Störung bei der Analyse der Gasprobe entsteht.

Die Erfindung wird im Folgenden anhand eines Ausführungsbeispiels unter Bezugnahme auf die Zeichnung im Einzelnen erläutert. In der Zeichnung zeigen:
- Fig.1: in schematischer Darstellung eine Seitenschnittansicht einer Gasmesszelle zur Analyse von gasförmigen Proben;
- Fig. 2: in schematischer Darstellung eine Seitenschnittansicht von einem Fenstereinschub.

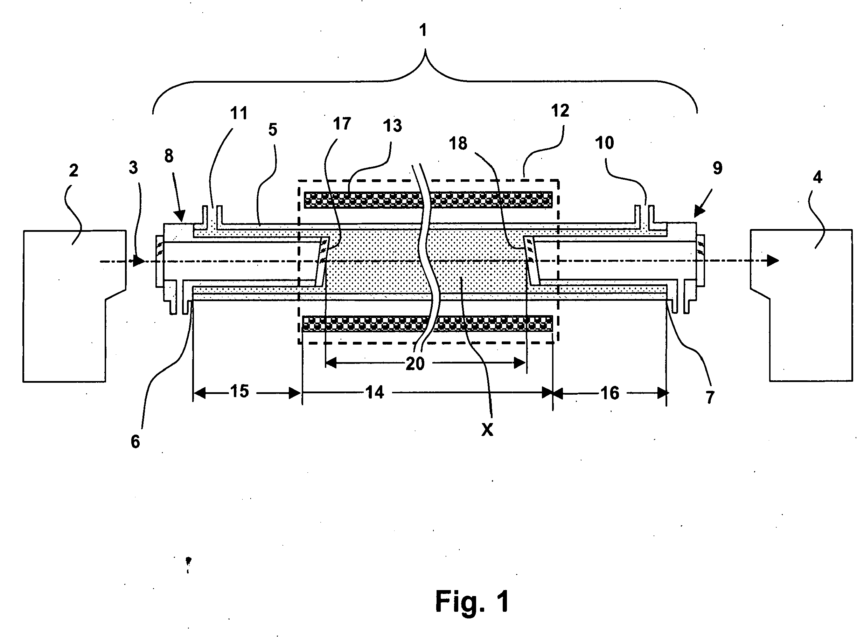

Figur 1 zeigt eine Gasmesszelle 1 und einen Messsender 2. Vom Messsender 2 wird ein Messstrahl 3 durch die Gasmesszelle 1 hindurch zu einem Messempfänger 4 gesendet. Dadurch ist möglich, eine Gasprobe X, die sich in einem Hohlkörper innerhalb der Gasmesszelle 1 befindet, spektralanalytisch zu untersuchen. Dieser Hohlkörper der Gasmesszelle 1 besteht aus einem rohrförmigen Grundkörper 5, der an den beiden Stirnflächen 6, 7 mit den beiden Fenstereinschüben 8, 9 abgeschlossen ist. Um den Hohlkörper in der Gasmesszelle 1 mit der Gasprobe zu füllen, sind in dem Grundkörper 5 eine Gaseinlassöffnung 10 und eine Gasauslassöffnung 11 angebracht.

Im mittleren Bereich ist um den Grundkörper 5 eine Heizeinrichtung 12 zur indirekten Beheizung des Grundkörpers 5 angebracht. Zu diesem Zweck sind in der Heizeinrichtung 12 beispielsweise mehrere Heizelemente 13 aus Siliziumkarbid angeordnet. Dadurch wird der Grundkörper 5 in seiner Längsausdehnung in eine beheizte Mittelzone 14, die einen Analyseraum bildet und in die beiden unbeheizten Übergangszonen 15, 16 aufgeteilt.

Wie ebenfalls aus Figur 1 ersichtlich, ist am Fenstereinschub 8 ein erstes, inneres Fenster 17 sowie am Fenstereinschub 9 ein erstes, inneres Fenster 18 angebracht. Beide inneren Fenster 17, 18 reichen so weit in den Grundkörpers 5 hinein, dass sie innerhalb der beheizten Mittelzone 14 angeordnet sind. Damit entsteht in der Gasmesszelle 1 eine Messzone 20, welche für die spektralanalytische Untersuchung der Gasprobe relevant ist.

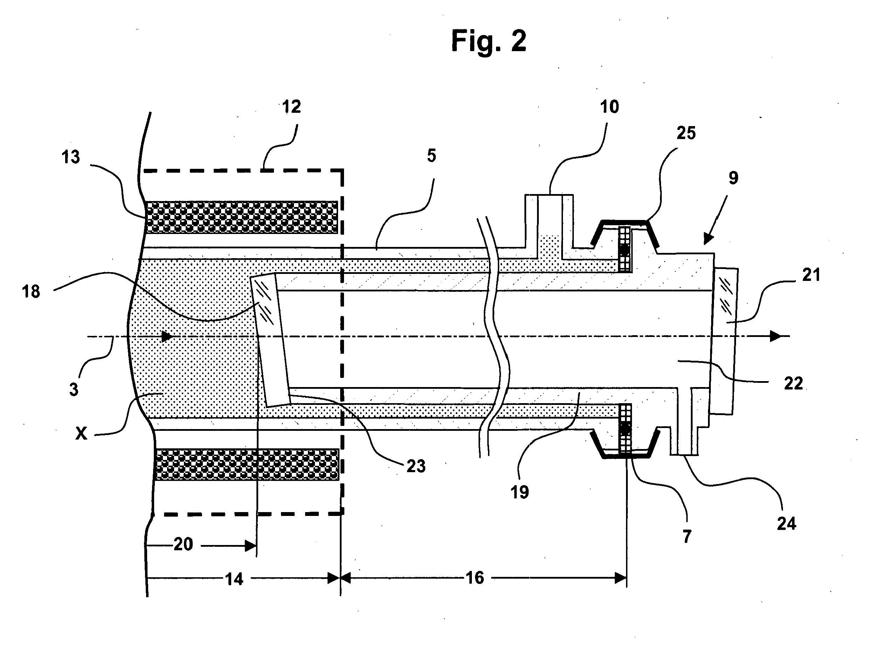

Gemäß Figur 2 besteht der Fenstereinschub 9 aus einem Keramikformteil 19, an dem neben dem ersten, inneren Fenster 18 jeweils noch ein zweites, äußeres Fenster 21 angebracht ist. Über eine Klemmvorrichtung 25 wird das Keramikformteil 19 und damit der Fenstereinschub 9 mit dem Grundkörper 5 verbunden. Beide Fenster, d. h. das innere Fenster 18 und das äußere Fenster 21, sind durch einen Zwischenraum 22 voneinander getrennt. Weil das äußere Fenster 21 ausreichend weit von der beheizten Mittelzone 14 entfernt ist, kann das äußere Fenster 21, beispielsweise mit einer Klebverbindung oder durch eine Klemmvorrichtung und einen O-Ring, problemlos an dem Keramikformteil 19 befestigt werden.

Im Gegensatz dazu ist das erste, innere Fenster 18 innerhalb der beheizten Mittelzone 14 angeordnet und damit einer hohen Temperatur ausgesetzt. Dadurch ist eine Klebverbindung des inneren Fensters 18 mit dem Keramikformteil 19 an dieser Stelle nicht möglich. Um dennoch eine möglichst gasdichte Verbindung zwischen dem inneren Fenster 18 mit dem Keramikformteil 19 zu erreichen, ist insbesondere die Oberfläche des inneren Fensters 18 sowie eine entsprechende Auflagefläche 23 am Keramikformteil 19 sehr genau geschliffen und poliert. Wenn nun das innere Fenster 18 mit einer geringen Kraft gegen das Keramikformteil 19 gedrückt wird, entsteht eine dichte Verbindung an dieser Auflagefläche 23. Zur Erzeugung dieser insbesondere auf das innere Fenster 18 einwirkenden Kraft wird der im Fenstereinschub 9 vorhandene Zwischenraum 22 evakuiert, so dass die beiden Fenster 18, 21 beidseitig an das Keramikformteil 19 im Fenstereinschub 9 angesaugt werden. Zur Evakuierung des Zwischenraumes 22 ist im Keramikformteil 19 ein Vakuumpumpenanschluss 24 angebracht, an den beispielsweise eine nicht dargestellte Drehschieberpumpe angeschlossen werden kann. Auf diese Weise ist es möglich, eine mit einer heißen Gasprobe X gefüllte Messzone 20 in der Gasmesszelle 1 möglichst gasdicht zu verschließen. Selbstverständlich tritt jedoch immer ein geringer Prüfgasverlust auf, wobei das Gas in das Vakuum des Fenstereinschubs gelangt. Dieses einströmende Gas wird von der Vakuumpumpe abgepumpt und muss durch "frisches" Prüfgas ersetzt werden.

### Bezugszeichenliste

- 1: Gasmesszelle
- 2: Messsender
- 3: Messstrahl
- 4: Messempfänger
- 5: Grundkörper
- 6, 7: Stirnfläche
- 8, 9: Fenstereinschub
- 10: Gaseinlassöffnung
- 11: Gasauslassöffnung
- 12: Heizeinrichtung
- 13: Heizelemente
- 14: beheizbare Mittelzone
- 15/16: unbeheizte Übergangszone
- 17, 18: inneres Fenster
- 19: Keramikformteil
- 20: Messzone
- 21: äußeres Fenster
- 22: Zwischenraum
- 23: Auflagefläche
- 24: Vakuumpumpenanschluss
- 25: Klemmvorrichtung
- X: Gasprobe

## Patentansprüche

1. Gasmesszelle mit einem Hohlkörper, in den die zu analysierende Probe über eine Gaseinlass- (10) und eine Gasauslassöffnung (11) eingebracht wird, wobei der Hohlkörper einen Analyseraum bildet und aus einem Grundkörper (5) besteht, der mit wenigstens einem ersten für Messstrahlung (3) durchlässigen Fenster (17; 18; 21) dicht abgeschlossen ist, so dass zur Analyse der Gasprobe das Gas von einem Messstrahl (3) durchleuchtet werden kann, wobei ein an den Grundkörper (5) befestigter und in den Hohlkörper hineinragender Fenstereinschub (8; 9) vorgesehen ist, wobei der Fenstereinschub (8; 9) das erste Fenster (17; 18) aufweist und bis in den Analyseraum des Hohlkörpers hineinreicht, so dass das erste Fenster (17; 18) innehalb des Analyseraum angeordnet ist, **dadurch gekennzeichnet, dass** der Grundkörper (5) im Mittelbereich (14) seiner Längsausdehnung eine durch eine Heizeinrichtung (12) beheizte Mittelzone (14), in der sich der Analyseraum befindet, besitzt, an die sich beidseitig jeweils eine unbeheizte Übergangszone (15; 16) anschließt und dass der Fenstereinschub (8; 9) an einer Stirnseite (6; 7) des Grundkörpers (5) angeordnet ist, dass der Fenstereinschub (8; 9) ein zweites, in Längsachse beabstandetes und wenigstens für die Messstrahlung (3) durchlässiges Fenster (21) aufweist, so dass zwischen dem ersten und dem zweiten Fenster ein Zwischenraum (22) vorhanden ist, wobei der Fenstereinschub (8; 9) durch die unbeheizte Übergangszone (15; 16) hindurch bis in die beheizte Mittelzone (14) in den Hohlkörper hinein reicht und dass das erste Fenster (17; 18) innerhalb der beheizten Mittelzone (14) angeordnet ist und durch ein im Zwischenraum (22) vorhandenes Vakuum im Fenstereinschub (8; 9) gehalten ist und dass zum Evakuieren des Zwischenraumes (22) ein Vakuumpumpenanschluss (24) vorhanden ist.

2. Gasmesszelle nach Anspruch 1, **dadurch gekennzeichnet, dass** der Grundkörper eine Keramikröhre (19) umfasst, an deren Enden beidseitig eine Metallhülse angebracht ist und dass die beheizte Mittelzone (14) des Hohlkörpers mittels der die Keramikröhre umschließenden Heizeinrichtung (12) indirekt beheizbar ist.

3. Gasmesszelle nach einem der vorhergehenden Ansprüche, **dadurch gekennzeichnet, dass** die beheizte Mittelzone (14) wenigstens drei unabhängig regelbare Heizzonen aufweist.

4. Gasmesszelle nach Anspruch 2, **dadurch gekennzeichnet, dass** die Keramikröhre aus Al2O3 besteht und ausgelegt ist, das Gas auf bis zu 1.400 °C aufzuheizen.

5. Gasmesszelle nach einem der vorhergehenden Ansprüche, **dadurch gekennzeichnet, dass** die Gaseinlass- und die Gasauslassöffnung des Hohlkörpers jeweils an den Metallhülsen vorgesehen sind.

6. Gasmesszelle nach einem der vorhergehenden Ansprüche, **dadurch gekennzeichnet, dass** der Fenstereinschub ein Keramikformteil aufweist, das mit einem Befestigungsflansch aus Metall zur Verbindung mit dem rohrförmigen Grundkörper verbunden ist.

7. Gasmesszelle nach den Ansprüchen 5 und 6, **dadurch gekennzeichnet, dass** zur gasdichten Verbindung des ersten dem Analyseraum zugewandten Fensters (17; 18) mit dem Keramikformteil am Keramikformteil eine Kontaktfläche (23) vorgesehen ist und die Fensteroberfläche so ausgebildet ist, dass durch den Unterdruck im Zwischenraum des Fenstereinschubs (8; 9) eine Dichtung durch Druck auf die Kontaktfläche erfolgt.

8. Gasmesszelle nach Anspruch 1, **dadurch gekennzeichnet, dass** zum gasdichten Abschluss des Zwischenraumes das zweite, dem Analyseraum abgewandte Fenster über einen O-Ring abgedichtet und durch eine Klemmvorrichtung gehalten ist.

9. Vorrichtung zum Kalibrieren optischer Gasanalysatoren mit einer Gasmesszelle nach einem der vorhergehenden Ansprüche.

## Claims

1. A gas measurement cell having a hollow body into which the sample to be analysed is introduced via a gas inlet opening (10) and a gas outlet opening (11), wherein the hollow body forms an analysis space and comprises a base body (5) which is tightly closed by at least one window (17; 18; 21) which is permeable for measurement radiation (3) so that an illuminating measurement beam can be shone through the gas for the analysis of the gas sample; wherein a window insert (8; 9) fastened to the base body (5) and projecting into the hollow body is provided ; and wherein the window insert (8; 9) has a first window (17; 18) and reaches up to and into the analysis space of the hollow body so that the first window (17; 18) is arranged within the analysis space, **characterised in that** the base body (5) has, in the centre region (14) of its longitudinal extent, a centre zone (14) which is heated by a heating device (12) and in which the analysis space is located, the middle zone being adjoined at both sides by a respective unheated transition zone (15; 16); and **in that** the window insert (8; 9) is arranged at an end face side (6; 7) of the base body (5); **in that** the window insert (8; 9) has a second window (21 which is spaced apart in the longitudinal axis and is permeable for the measurement radiation (3) so that an intermediate space (22) is present between the first window and the second window, with the window insert (8; 9) reaching through the unheated transition zone (15; 16) into the hollow body up to and into the heated centre zone (14); and **in that** the first window (17; 18) is arranged within the heated centre zone (14) and is held in the window insert (8; 9) by a vacuum present in the intermediate space (22); and **in that** a vacuum pump connection (24) is present for the evacuation of the intermediate space (22).

2. A gas measurement cell in accordance with claim 1, **characterised**
**in that** the base body includes a ceramic tube (19) at whose ends a metal sleeve is attached at both sides; and in that the heated centre zone (14) of the hollow body is indirectly heatable by means of the heating device (12) surrounding the ceramic tube.

3. A gas measurement cell in accordance with any one of the preceding claims, **characterised in that** the heated centre zone (14) has at least three independently regulable heating zones.

4. A gas measurement cell in accordance with claim 2, **characterised in that** the ceramic tube is made from Al2O3 and is designed to heat the gas up to 1400°C.

5. A gas measurement cell in accordance with any one of the preceding claims, **characterised in that** the gas inlet opening and the gas outlet opening of the hollow base are each provided at the metal sleeves.

6. A gas measurement cell in accordance with any one of the preceding claims, **characterised in that** the window insert has a ceramic moulding which is connected to a fastening flange made of metal for the connection to the tubular base body.

7. A gas measurement cell in accordance with claim 5 and claim 6, **characterised in that** a contact surface (23) is provided at the ceramic moulding for the gas tight connection of the first window (17; 18) facing the analysis space to the ceramic moulding; and **in that** the window surface is designed so that a sealing takes place by pressure onto the contact surface by the underpressure in the intermediate space of the window insert (8; 9).

8. A gas measurement cell in accordance with claim 1, **characterised in that** the second window remote from the analysis space is sealed by an O ring and is held by a clamping apparatus for the gas tight closure of the intermediate space.

9. An apparatus for the calibration of optical gas analysers having a gas measurement cell in accordance with any one of the preceding claims.

## Revendications

1. Cellule de mesure de gaz comprenant un corps creux, dans lequel l'échantillon à analyser est introduit via une ouverture d'entrée de gaz (10) et une ouverture de sortie de gaz (11), dans laquelle le corps creux forme une chambre d'analyse et est constitué d'un corps de base (5) qui est refermé de manière étanche avec au moins une première fenêtre (17 ; 18 ; 21) perméable au rayonnement de mesure (3), de sorte que pour l'analyse de l'échantillon de gaz, le gaz peut être illuminé par un rayon de mesure (3), et il est prévu un tiroir de fenêtre (8 ; 9) fixé au corps de base (5) et pénétrant dans le corps creux, dans laquelle le tiroir de fenêtre (8 ; 9) comprend une première fenêtre (17 ; 18) et s'étend jusque dans la chambre d'analyse du corps creux, de sorte que la première fenêtre (17 ; 18) est agencée à l'intérieur de la chambre d'analyse, **caractérisée en ce que** le corps de base (5) possède, dans la région médiane (14) de son extension longitudinale, une zone médiane (14) chauffée par un dispositif de chauffage (12) et dans laquelle se trouve la chambre d'analyse, à laquelle se raccorde sur les deux côtés respectivement une zone de transition (15 ; 16) non chauffée, et **en ce que** le tiroir de fenêtre (8 ; 9) est agencé sur une face frontale (6 ; 7) du corps de base (5), **en ce que** le tiroir de fenêtre (8 ; 9) comprend une seconde fenêtre (21) écartée dans l'axe longitudinal et perméable au moins pour le rayonnement de mesure (3), de sorte qu'il existe un espace intermédiaire (22) entre la première et la seconde fenêtre, dans laquelle l'insert de fenêtre (8 ; 9) pénètre à travers la zone de transition (15 ; 16) non chauffée jusque dans la zone médiane (14) chauffée dans le corps creux, et **en ce que** la première fenêtre (17 ; 18) est agencée à l'intérieur de la zone médiane chauffée (14) et est maintenue dans l'insert de fenêtre (8 ; 9) par un vide présent dans l'espace intermédiaire (22), et **en ce qu'**il est prévu un raccord de pompe à vide (24) pour l'évacuation de l'espace intermédiaire (22).

2. Cellule de mesure de gaz selon la revendication 1, **caractérisée en ce que** le corps de base comprend un tube en céramique (19), au deux extrémités duquel est montée une douille métallique sur les deux côtés, et **en ce que** la zone médiane chauffée (14) du corps creux est susceptible d'être chauffée indirectement au moyen du dispositif de chauffage (12) qui entoure les tubes en céramique.

3. Cellule de mesure de gaz selon l'une des revendications précédentes, **caractérisée en ce que** la zone médiane chauffée (14) comprend au moins trois zones de chauffage susceptibles d'être régulées indépendamment.

4. Cellule de mesure de gaz selon la revendication 2, **caractérisée en ce que** les tubes en céramique sont en Al₂O₃ et sont conçus pour chauffer le gaz jusqu'à 1400°C.

5. Cellule de mesure de gaz selon l'une des revendications précédentes, **caractérisée en ce que** l'ouverture d'entrée de gaz et l'ouverture de sortie de gaz du corps creux sont respectivement prévues au niveau des douilles métalliques.

6. Cellule de mesure de gaz selon l'une des revendications précédentes, **caractérisée en ce que** le tiroir de fenêtre comprend une pièce conformée en céramique, qui est reliée à une bride de fixation en métal pour la liaison avec le corps de base de forme tubulaire.

7. Cellule de mesure de gaz selon les revendications 5 et 6, **caractérisée en ce que**, pour la liaison étanche au gaz de la première fenêtre (17 ; 18), tournée vers la chambre d'analyse, avec la pièce conformée en céramique, il est prévu une surface de contact (23) sur la pièce conformée en céramique, et la surface de la fenêtre est réalisée de telle façon que grâce à la dépression dans l'espace intermédiaire du tiroir de fenêtre (8 ; 9), se produit un étanchement par pression sur la surface de contact.

8. Cellule de mesure de gaz selon la revendication 1, **caractérisé en ce que** pour une isolation étanche au gaz de l'espace intermédiaire, la seconde fenêtre détournée de la chambre d'analyse est étanchée et est maintenue par un dispositif à serrage.

9. Dispositif pour calibrer des analyseurs de gaz optique, comprenant une cellule de mesure de gaz selon l'une des revendications précédentes.
